(19) Europäisches Patentamt
European Patent Office
Office européen des brevets

(11) **EP 3 930 201 A1**

(12) **EUROPEAN PATENT APPLICATION**

(43) Date of publication:
**29.12.2021 Bulletin 2021/52**

(51) Int Cl.:
***H04B 1/08*** *(2006.01)*    ***H04B 1/12*** *(2006.01)*
***H04B 7/08*** *(2006.01)*

(21) Application number: **20182599.9**

(22) Date of filing: **26.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hirschmann Car Communication GmbH**
**72654 Neckartenzlingen (DE)**

(72) Inventor: **Rafalczik, Achim**
**86529 Schrobenhausen (DE)**

(74) Representative: **Patentanwaltskanzlei WILHELM & BECK**
**Prinzenstraße 13**
**80639 München (DE)**

(54) **OPERATING METHOD FOR A RECEIVER UNIT**

(57)    The invention relates to a method of operation of a receiver unit for an entertainment system of a vehicle, in which the receiver unit comprises at least two connectors for antennas and two receiving electronics connected to the connectors and a controller electronics. The receiving electronics are equipped to output an entertainment signal to a main unit of the entertainment system. The controller electronics is equipped to perform the following steps. First at least one pre-defined system parameter is determined and subsequently, one of the receiving electronics is at least partially deactivated based upon the pre-determined system parameter.

Fig. 2

**Description**

The invention relates to a method of operation of a receiver unit for an entertainment system of a vehicle, a receiver unit for an entertainment system of a vehicle and an entertainment system of a vehicle.

Entertainment systems of vehicles are known in the state of the art. These entertainment systems usually comprise a head unit placed in the vehicle in such a way that a driver and/or a passenger of the vehicle may access controls of the head unit. The entertainment system further comprises a receiver unit which is connected to the head unit that comprises connectors for antennas or the antennas itself and receiving electronics which may receive an antenna signal and convert the antenna signal to an entertainment signal which is then transferred to the head unit and output to a loudspeaker and/or a display. The receiver unit is usually placed in closed vicinity to the antenna to minimize the need for coax cables between the antennas and the receiver unit. However, the receiver unit may also be placed in closed vicinity to the head unit. If the receiver unit is placed closed to the antennas, cooling of electronics of the receiver unit with an air conditioning system provided by the vehicle is not possible anymore, compared to a location of the receiver unit closed to the head unit and therefore in vicinity to the inside of the vehicle. During operation, when the receiver unit receives signals from the antennas and transforms these signals to entertainment systems, heat is dissipated by the receiving electronics and therefore, a heat management for the receiver unit may be needed. Particularly, the receiver unit may be placed just below a roof of the vehicle. Sunlight hitting the vehicle roof may further increase the temperature of the receiver unit, particularly if the vehicle is painted in a dark colour. Furthermore, receiver units known in the state of the art may include a temperature sensor which may shut off the receiver unit or parts of the receiver unit if the temperature is above an operation temperature of the receiver unit.

An assignment of the invention is to provide a method of operation of a receiver unit for an entertainment system of a vehicle, which allows for a better energy and temperature management of the receiver unit. Another assignment of the invention is to provide a receiver unit capable of performing this method of operation and an entertainment system with such a receiver unit.

A receiver unit for an entertainment system of a vehicle comprises at least two receiving electronics and a controller electronics. The receiving electronics may be connected to at least one antenna each. There may be connectors assigned to one of the receiving electronics. The connectors may receive different radio frequency bands simultaneously, so the number of connectors is independent from the number of receiving electronics. The receiving electronics are each equipped to output an entertainment signal to a main unit of the entertainment system. The controller electronics is equipped to perform the following steps:

- Determining at least one pre-defined system parameter;
- At least partially deactivating one of the receiving electronics based upon the pre-determined system parameter.

A method of operation of a receiver unit for an entertainment system comprises the steps above performed by the controller electronics of the receiver unit.

The basic idea of this method is to selectively deactivate parts of the receiver unit, particularly to deactivate one of the receiving electronics or to at least partially deactivate one of the receiving electronics based upon the pre-determined system parameter to allow for a better heat management of the receiver unit. If one of the receiving electronics is at least partially deactivated, less heat is dissipated within the receiver unit and therefore it may be easier to keep the receiver unit below an emergency shut-off temperature which corresponds to the temperature where the electronics of the receiver unit might be affected and thusly a shut-down of the receiver unit is necessary. Therefore, the method allows for a shut-down of parts of the receiver unit before the critical emergency shut-off temperature is reached and therefore, parts of the entertainment system still may be usable.

The receiver unit may comprise several receiving electronics for the same entertainment service. For example, the receiver unit may comprise two receiving electronics which are radio tuners and both are connected to a radio antenna individually. This is useful in a moving vehicle, as due to the movement, the signal-to-noise ratio of both antennas may differ and the signals of both antennas may be combined properly to operate the entertainment system.

In one embodiment, the pre-defined system parameter is a vehicle velocity and the deactivating of the receiving electronics is performed when the vehicle velocity is below a threshold velocity. The vehicle velocity may particularly be below a threshold velocity when the vehicle velocity is zero. This means that the expression that the vehicle velocity is below a threshold velocity also includes a deactivation of the receiving electronics only at a standstill of the vehicle. In this case simultaneously receiving the same entertainment signal by multiple antennas is not necessary anymore. At a given position, the antenna with the better signal-to-noise ratio can be determined and subsequently only this antenna and its corresponding receiving electronics could be used to receive radio transmissions. The other antenna and the other receiving electronics may be switched off without a user of the vehicle even noticing, saving energy within the receiver unit, leading to less dissipated heat and therefore leading to a slower increase in temperature of the receiver unit. This is particularly the case as a standing vehicle is less cooled by airstream, leading to an increased temperature of the receiver unit, particularly when the receiver unit is placed below the roof of the vehicle.

In one embodiment, the controller unit of the receiver unit receives the vehicle velocity from a vehicle control unit. The control unit of the receiver unit therefore may have an input connector for such a vehicle velocity signal, particularly the controller electronics may be connected to a vehicle bus. This allows for an easy, velocity-based deactivation of receiving electronics within the receiver unit and is easy to implement.

In one embodiment, the pre-defined system parameter is a change in a frequency spectrum measured by at least one of the antennas. The deactivation of the receiving electronics is performed when the change in the frequency spectrum is below a certain threshold value. The antenna and the receiving electronics may be equipped to measure frequency spectra, particularly signal intensity over frequency. If after a given time, particularly ten seconds or one minute, the frequency spectrum stays the same or almost the same, it may be assumed that this is also true in the near future and therefore, the receiving electronics which provides less signal may be switched off. The frequency spectrum particularly does not change at a standstill of the vehicle, so using this method allows for another possibility to detect a standstill of the vehicle.

In one embodiment, the change in the frequency spectrum is calculated using a variance of a change in a spectral intensity for pre-defined frequencies. This allows for an easy to implement method of calculating changes in frequency spectra. In one embodiment, the change in the frequency spectrum comprises a change of a signal-to-noise ratio of the frequency spectrum. This is also an easy to implement method for calculating changes in frequency spectra. The methods mentioned above may be combined. This means, that the controller electronics may be equipped to both receive a velocity signal from a vehicle control unit and also identify a vehicle standstill based upon measurements of frequency spectra.

In one embodiment, the pre-defined system parameter is a temperature. A temperature of the receiver unit is measured and the measured temperature is compared to a threshold temperature, wherein the deactivating of the receiving electronics is performed when the measured temperature is above the threshold temperature. The threshold temperature may be below an emergency shut-off temperature and therefore allows for an onset of temperature management steps before the electronics are affected. The temperature of the receiver unit in this case may be measured using a sensor placed within the receiver unit. Therefore, a probability that the emergency shut-off temperature is reached may be minimized by this method.

In one embodiment, the temperature is measured within a semiconductor structure, for example a diode or a transistor, of the receiving electronics. This allows for more accurate measurements. Particularly, several semiconductor structures of the receiving electronics may be equipped with the possibility to measure the temperature of the semiconductor structures.

In one embodiment, the at least partially deactivated receiving electronics is reactivated based upon the pre-determined system parameter. This may also be based upon all three of the system parameters discussed above or of a combination of two of these system parameters. Particularly, a decrease in temperature below the threshold temperature may allow for a deactivating of the receiving electronics. Additionally or alternatively, the end of a standstill of the vehicle may also allow for or result in a need to reactivate the receiving electronics.

All the implementations mentioned above may be combined. Particularly, the controller electronics may be equipped to shut off one of the receiving electronics due to an increased temperature and also may be equipped to shut off one of the receiving electronics due to a standstill of the vehicle. The standstill in this case may both be detected by a change in the frequency spectrum or by a signal from the vehicle control unit. It may also be the case that the reactivation of the receiving electronics is based on a different pre-determined system parameter than the deactivation was. For instance, the standstill of the vehicle may have been detected by a change in the frequency spectrum. At this point, any increased velocity of the vehicle, particularly provided by the vehicle control unit, may be used as signal to reactivate the receiving electronics again. Another possibility is that the standstill of the vehicle was determined due to a signal provided by the vehicle control unit. When the vehicle still stands but a large vehicle like a bus or a truck moves in the vicinity of the vehicle, the frequency spectrum may also change and the therefore the need for reactivating the receiving electronics may arise, as now another antenna might provide a better signal-to-noise ratio.

In one embodiment, at least one of the receiving electronics performs station scanning and the partially deactivating one of the receiving electronics comprises a deactivation of the station scanning. The deactivation of the station scanning in this case may include a full deactivation or also may include an increased scanning interval, meaning that the station scanning is not performed for example every ten seconds, but only every sixty seconds. The station scanning may particularly be deactivated during a standstill of the vehicle, as during a standstill of the vehicle, the frequency spectrum won't change anymore.

In one embodiment, the deactivating of the receiving electronics is performed in a pre-defined sequence. The pre-defined sequence comprises an initial reduction or switching-off of station scanning and a subsequent switching off of a receiving electronics. Another step may be switching-off of all but one of the receiving electronics.

In one embodiment, the receiving electronics are equipped to process digital radio signals and/or digital video signals and/or digital television signals and/or analog radio signals and/or analog video signals and/or analog television signals and/or internet services. Each of the signals/services mentioned above may be assigned to a plurality of antennas and receiving electronics within the receiver unit. For instance, the receiver unit may be part of a radio tuner comprising two connectors for analog radio antennas and two connectors for digital radio antennas as well as two receiving electronics for analog radio and two receiving electronics for digital radio. In this case, the pre-defined sequence may comprise an initial switch-off or reduction of station scanning, a subsequent switching-off of the receiving electronics of the analog radio signal and subsequently a switching-off of all but one of the receiving electronics of the digital radio signal. If other services than radio, for instance video or television services or internet services are also processed by the receiver unit, the pre-defined sequence may also be adapted corresponding to the signal a user of the vehicle is using at the moment. Particularly, if the user uses the television or video signal part of the entertainment system, the receiving electronics for radio signals may be switched off before the receiving electronics of the television or video signals. If the user uses the radio, the sequence may be the other way round.

An entertainment system of a vehicle comprises the receiver unit according to the invention and further comprises a main unit capable of receiving entertainment signals from the receiving electronics and to output the received entertainment signals to a loudspeaker and/or a display. The problem of the invention, the technical implementation of the solution and the advantages of the invention become clear with reference to the exemplary embodiments, which are to be described hereinafter with the help of Figures. In the Figures, in schematic depiction

Figure 1    shows a vehicle with an entertainment system;

Figure 2    shows a receiver unit;

Figure 3    shows frequency spectra for a moving vehicle;

Figure 4    shows frequency spectra of a standing vehicle;

Figure 5    shows a flowchart of a method of operation of a receiver unit;

Figure 6    shows pre-defined system parameters and a response to the pre-defined system parameters; and

Figure 7    shows another receiver unit.

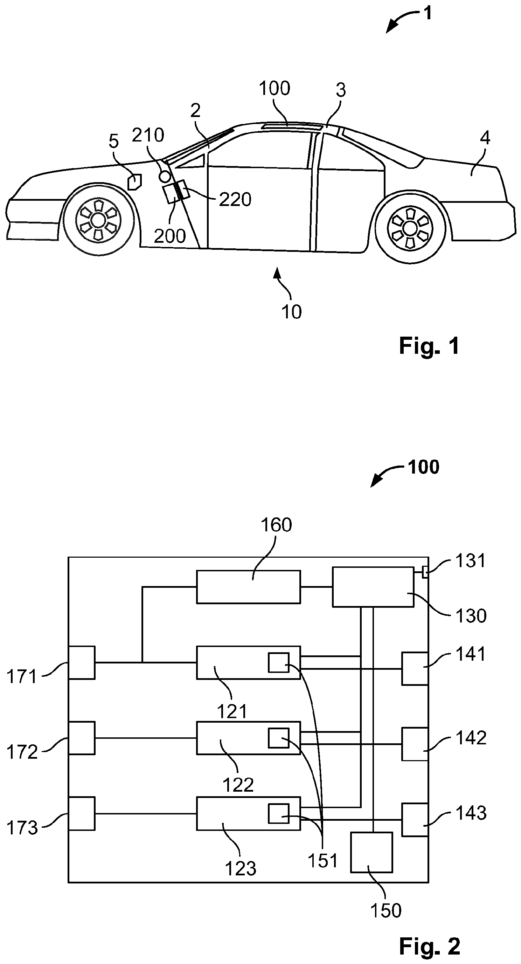

Figure 1 shows a cross-section of a vehicle 1 with an entertainment system 10. The entertainment system 10 comprises a receiver unit 100 and a main unit 200. The entertainment system 10 further comprises an optional loudspeaker 210 and an optional display 220. The entertainment system 10 may further comprise another receiver unit 100, although in Figure 1 only one receiver unit 100 is shown. In other words, the entertainment system 10 may comprise a plurality of receiver units 100. The receiver unit 100 is located below the roof 3 of the vehicle 1. The loudspeaker 210 and display 220 are located in a way that sound emerging the loudspeaker 210 is hearable in an interior 2 of the vehicle 1 and the display 220 may be seen from the interior 2 of the vehicle 1. The main unit 200 is located in the vicinity of the interior 2 of the vehicle 1, particularly in vicinity of the display 220. In other, not shown, embodiments, the display 220 may be part of the main unit 200. The display 220 may be a touch display or buttons may be located in the interior 2 of the vehicle 1 to control the main unit 200. Additionally, a combination of buttons and touch display is possible. Other locations for the receiver unit 100 may a be a trunk 4 of the vehicle 1 or any other suitable location within the vehicle 1. If the vehicle 1 is standing, some light falling on the roof 3 of the vehicle 1 may lead to an increase in temperature of the receiver unit 100. If the vehicle 1 is moving, airstream around the vehicle 1 cools the roof 3 and therefore also the receiver unit 100.

Figure 2 shows a receiver unit 100 which may be the receiver unit 100 of Figure 1. The receiver unit 100 comprises a first connector 111, a second connector 112 and a third connector 113 for antennas. The receiver unit 100 further comprises a first receiving electronics 121, a second receiving electronics 122 and a third receiving electronics 123. The first receiving electronics 121 is connected to the first connector 111, the second receiving electronics 122 is connected to the second connector 112 and the third receiving electronics 123 is connected to the third connector 113. All receiving electronics 121, 122, 123 are connected to a controller electronics 130. The first receiving electronics 121 is connected to a first output 141, the second receiving electronics 122 is connected to a second output 142 and the third receiving electronics 123 is connected to a third output 143. Entertainment signals received by antennas connected to the connectors 111, 112, 113 may be processed by the receiving electronics 121, 122, 123 and an entertainment signal may then be output via the outputs 141, 142, 143 to the main unit 200 of Figure 1. In another, not shown embodiment, antennas may be part of the receiver unit 100 and may be connected to the connectors 111, 112, 113 of the receiving electronics 121, 122, 123. In this case, the connectors 111, 112, 113 may comprise circuit paths on a circuit board of the receiver unit 100. In the shown embodiment, the connectors 111, 112, 113 may be coaxial connectors. Although a third connector 113, a third receiving electronics 123 and a third output 143 is shown in Figure 2, these components could also be omitted. The outputs 141, 142, 143 could also be implemented as one single output to the main unit 200.

Instead of one connector 111, 112 for each receiving electronics 121, 122, there may be one connector for all receiving electronics 121, 122. This connector may be connected to an antenna or a set of antennas. The connectors 111, 112 may further receive different radio frequency bands simultaneously, so the number of connectors 111, 112 is independent from the number of receiving electronics 121, 122.

The controller electronics 130 is equipped to determine at least one pre-defined system parameter and to at least particularly deactivate one of the receiving electronics 121, 122, 123 based upon the pre-determined system parameter.

In one embodiment, the pre-determined system parameter is a vehicle velocity. The deactivating of the receiving electronics 121, 122, 123 is performed when the vehicle velocity is below a threshold velocity. In one embodiment, the controller electronics 130 receives the vehicle velocity from a vehicle control unit 5, as shown in Figure 1. To be able to do so, the receiver unit 100 comprises a parameter input 131 connected to the controller electronics 130. The parameter input 131 may also be used to receive signals from the main unit 200.

The receiver unit 100 of Figure 2 also comprises an optional temperature sensor 150 connected to the controller electronics 130. The temperature sensor 150 may be used to measure a temperature of the receiver unit 100 and the controller electronics 130 in this case is equipped to at least partially deactivate one of the receiving electronics 121, 122, 123 based upon the temperature measured by the temperature sensor 150. To do so, the measured temperature may be compared to a threshold temperature and the deactivating of the receiving electronics 121, 122, 123 is performed when the measured temperature is above the threshold temperature. This threshold temperature may be below an emergency shut-off temperature and therefore, the at least partially deactivating of the receiving electronics 121, 122, 123 may occur before the emergency shut-off temperature is reached leading to a better temperature management even before destruction of components of the receiver unit 100 due to high temperature arises. In one embodiment, a semiconductor structure 151 of one of the receiving electronics 121, 122, 123 may be equipped to measure the temperature according to which the partially deactivating of the receiving electronics 121, 122, 123 occurs. The semiconductor structure 151 may be equipped with a temperature sensor or measurement characteristics of the semiconductor structure 151 may be used to measure this temperature.

In one embodiment, the receiver unit 100 comprises an optional station scanning unit 160. The station scanning unit 160 is connected to the controller electronics 130 and to the first connector 111. The station scanning unit 160 is equipped to measure a frequency spectrum received by the antenna connected to the first connector 111. The station scanning unit 160 may also be part of the first receiving electronics 121. Alternatively, the station scanning unit may also include a receiving electronics.

The receiver unit 100 is shown to comprise three receiving electronics 121, 122, 123. Of course, a higher number of receiving electronics may also be applicable.

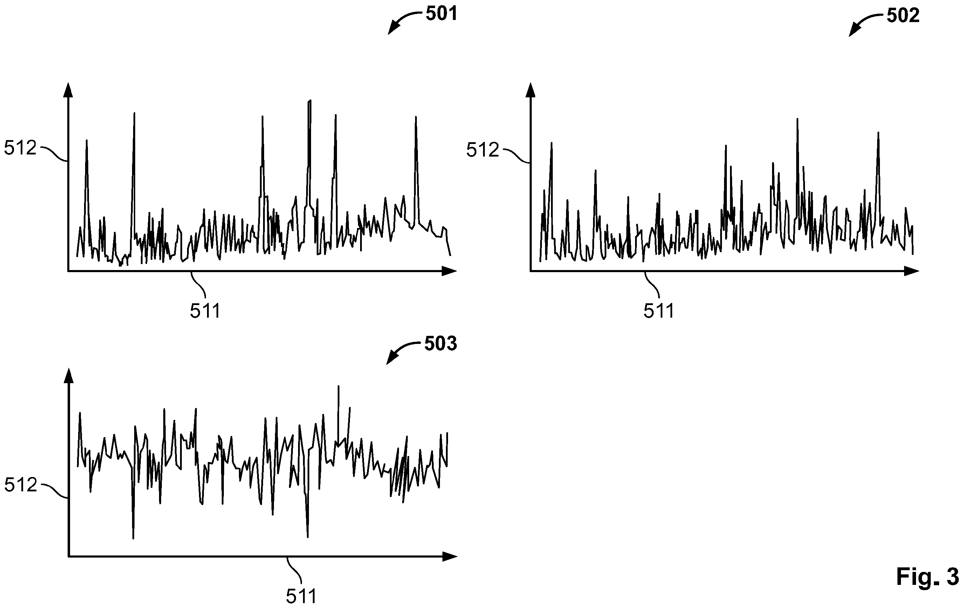

Figure 3 shows a first frequency spectrum 501 and a second frequency spectrum 502. The first frequency spectrum 501 is measured by the station scanning unit 160 at an earlier time than the second frequency spectrum 502. A first axis 511 of the frequency spectrum 501, 502 equals to a frequency. A second axis 512 equals to an intensity of a signal received at these frequencies. Figure 3 further shows a difference spectrum 503 which is a difference of the first frequency spectrum 501 and the second frequency spectrum 502. The difference spectrum 503 shows erratic peaks with high values and therefore a change in the frequency spectra 501, 502 above a certain threshold value.

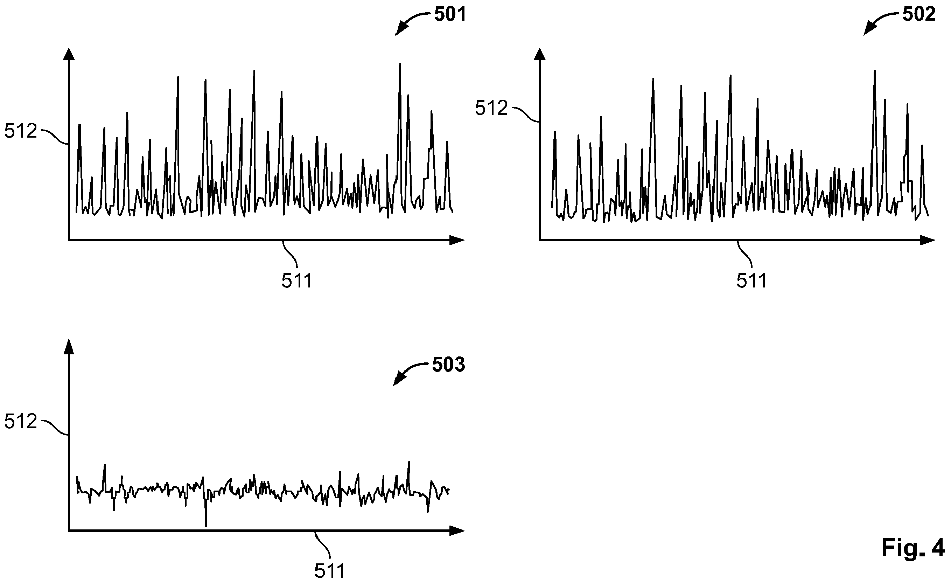

Figure 4 also shows two frequency spectra 501, 502 and a corresponding difference spectrum 503. In this case, the frequency spectra 501, 502 are much more identical, so that the difference spectrum 503 shows less erratic behaviour and therefore, the change in the frequency spectrum is below a certain threshold value. This may be attributed to a standstill of the vehicle, as the frequency spectra 501, 502 do not change so much when the vehicle 1 stands still. Therefore, one of the receiving electronics 121, 122, 123 may be switched off. In one embodiment, the change in the frequency spectrum is calculated using a variance of a change in a spectral intensity for pre-defined frequencies. For instance, a probability p for a movement may be calculated using the formula:

$$p = \frac{\sum_{n=1}^{N}\left(diff_n - \bar{d}\right)^2}{N}$$

In this formula N is the number of frequencies evaluated, n is the index of the actual frequency, d is the mean value of the changes in intensity and $diff_n$ is the change in intensity at this frequency within the two spectra.

Alternatively, a standard deviation could be used and calculated from the formula above. Another alternative would be to calculate the probability with the formula:

$$p = \frac{\sum_{n=1}^{N}|diff_n|}{N}$$

In another embodiment, the change in the frequency spectrum comprises a change of a signal-to-noise ratio of the frequency spectrum. The formulas for the probability p may be modified accordingly.

In one embodiment, the station scanning of the station scanning unit 160 is also partially deactivated based upon a pre-defined system parameter. This may include greater intervals between the station scanning or a complete shut-off of the station scanning. If, for example, a standstill of the vehicle is either detected by the method described in Figures 3 or 4 or received by the controller electronics 130 via the parameter input 131, it is possible to perform one last station scanning, as during standstill the frequency spectrum and therefore the available stations will not change. After this final station scanning, the station scanning unit 160 may be switched off until another movement of the vehicle 1 is detected, either by a signal received by the controller electronics 130 from the vehicle control unit 5 or by a change in frequency spectra according to Figures 3 and 4, more assembling the spectra shown in Figure 3.

In one embodiment, the at least partially deactivated receiving electronics 121, 122, 123 are reactivated based upon the pre-determined system parameter. If, for instance, the temperature decreases, for instance due to the partially deactivating of the receiving electronics 121, 122, 123 or due to increased airstream around the vehicle 1 due to a higher velocity, the partially deactivated receiving electronics 121, 122, 123 may be again reactivated to improve the entertainment system 10.

In one embodiment, the deactivating of the receiving electronics 121, 122, 123 is performed in a predefined sequence, wherein the sequence comprises an initial reduction or switching-off of station scanning and a subsequent switching-off of all but one of the receiving electronics 121, 122, 123.

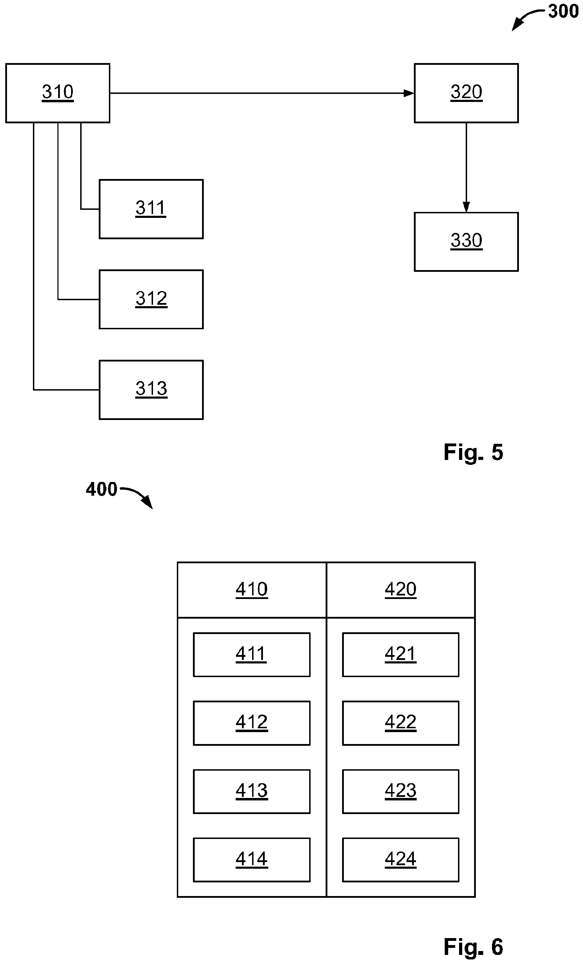

Figure 5 shows a flowchart 300 of a method of operation of a receiver unit 100 for an entertainment system 10 of a vehicle 1. In a first step 310, at least one pre-defined system parameter is determined. In a second step 320, at least one of the receiving electronics 121, 122, 123 is at least partially deactivated upon the pre-determined system parameter. In an optional third step 330, the deactivated receiving electronics 121, 122, 123 is reactivated. The first step 310 may comprise a determination of a temperature in a temperature determination step 311, may comprise the measurement of a difference spectrum 503 in a difference spectrum step 312 and may also comprise the determination of a velocity in a velocity determination step 313. The optional reactivating may be based upon all these three parameters and it is also possible for a deactivation to be based upon another parameter than the reactivation.

For instance, a vehicle approaching a crossing with traffic lights may need to stop at the crossing. This stop may be either detected by the difference spectrum method according to the difference spectrum step 312 or may be detected according to the velocity determination step 313. If the zero velocity of the vehicle 1 is detected by the velocity determination step 313, all but one receiving electronics 121, 122, 123 may be switched off and the station scanning unit 160 may perform one last station scanning and afterwards also may be switched off. If now a truck or a bus approaches the vehicle 1 and therefore changes the signal received by the antennas and the receiving electronics 121, 122, 123, the receiving electronics 121, 122, 123 may be reactivated and, as the vehicle still stands, the receiving electronics 121, 122, 123 with the best signal-to-noise ratio may be selected and the other receiving electronics may be switched off again.

Subsequently, when a movement of the vehicle is again detected, for instance by the difference spectrum step 312, all receiving electronics 121, 122, 123 and the station scanning unit 160 may be reactivated.

Figure 6 shows a table 400 with pre-defined system parameters 410 and reactions 420. A first pre-defined system parameter 411 may be the velocity of the vehicle. If the velocity of the vehicle drops below a threshold velocity, particularly when the vehicle 1 comes to a standstill, first reactions 421 may be performed. One last station scanning by the station scanning unit 160 may be performed and afterwards, the receiving electronics 121, 122, 123 with the best signal-to-noise ratio may be used and any other receiving electronics 121, 122, 123 are switched off. If the vehicle velocity is afterwards detected to be above the threshold velocity again, the receiving electronics 121, 122, 123 and the station scanning unit 160 may be reactivated.

A second pre-defined system parameter 412 may be a temperature. A second reaction 422 two a temperature above a threshold temperature but still below an emergency shut-off temperature may be to increase intervals between the station scanning. This increase in intervals may be performed in a way that usually station scanning is performed all the time and if the temperature is above the threshold temperature, station scanning intervals may be increased to occur every ten seconds or twenty seconds or thirty seconds or every minute.

If this leads to a decrease of the temperature below the threshold temperature again, no further measures are taken. If an increase in the scanning interval still does not lead to a decrease in temperature below the threshold temperature, one of the receiving electronics 121, 122, 123 may be switched off. This may be particularly the case, if, for instance, a radio station that is selected by a user of the entertainment system 10 is only available as digital radio service, any analog radio receiving electronics are switched off as no analog back fall transmission is available anyway. If the temperature still does not decrease below the threshold temperature, all but one receiving electronics 121, 122, 123 may be switched off, wherein this is performed in such a way, that the receiving electronics with the best signal-to-noise ratio is still switched on.

A third pre-defined system parameter 413 may be an increase in temperature above the emergency shut-off temperature. A third reaction 423 to this increase in temperature could be a complete deactivation of the receiver unit 100.

A fourth pre-defined system parameter 414 may be a change in frequency spectra, particularly a change in the difference spectrum 503. If the difference spectrum 503 is below a certain threshold value, a fourth reaction 424 may be performed. This fourth reaction may be, as the difference spectrum 503 being below the threshold value, to also perform a last station scanning by the station scanning unit 160 and subsequently to switch off the station scanning unit 160 and also to switch off all but one receiving electronics 121, 122, 123, and particularly to keep working the receiving electronics 121, 122, 123 which has the best signal-to-noise ratio.

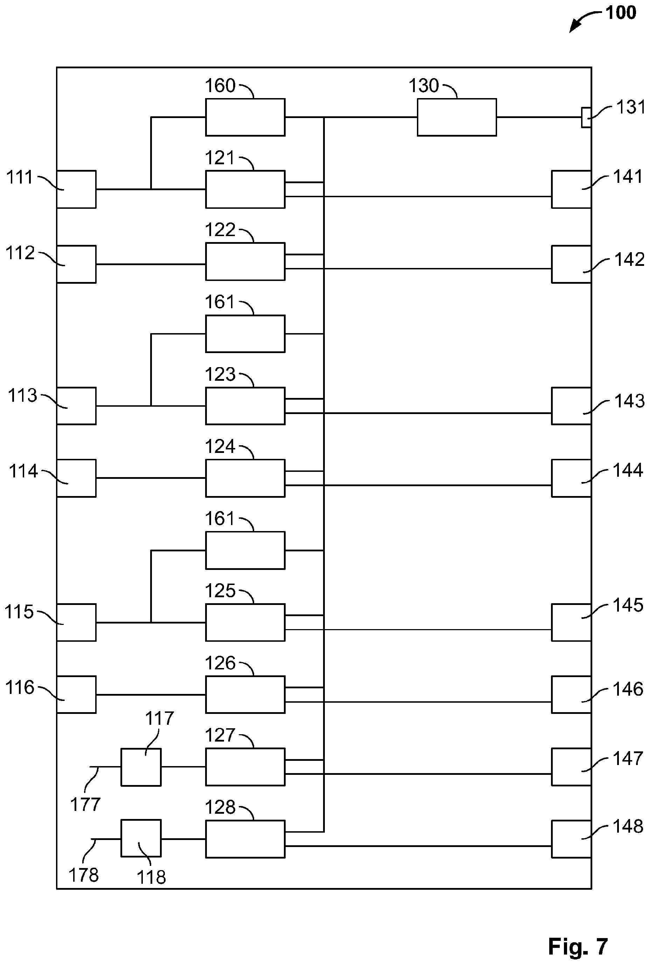

Figure 7 shows another embodiment of a receiver unit 100. The receiver unit 100 comprises a first receiving electronics 121, a second receiving electronics 122, a third receiving electronics 123, a fourth receiving electronics 124, a fifth receiving electronics 125, a sixth receiving electronics 126, a seventh receiving electronics 127 and an eighth receiving electronics 128. The receiver unit 100 further comprises a first connector 111, a second connector 112, a third connector 113, a fourth connector 114, a fifth connector 115, a sixth connector 116, a seventh connector 117 and an eighth connector 118. The receiver unit 100 also comprises a first output 141, a second output 142, a third output 143, a fourth output 144, a fifth output 145, a sixth output 146, a seventh output 147 and an eighth output 148. In particular, the first receiving electronics 121 and the second receiving electronics 122 are associated to a first signal to be received. The first receiving electronics 121 and the second receiving electronic 122 may for instance be equipped to process digital radio signals. The station scanning unit 160 is connected to the first connector 111 and therefore capable of performing station scanning for the digital radio. The third receiving electronics 123 and the fourth receiving electronics 124 may be equipped to receive analog radio signals. Therefore, another station scanning unit 161 may be used to perform station scanning for the analog radio service. The fifth receiving electronics 125 and the sixth receiving electronics 126 may be equipped to process digital video or digital television signals and may be also equipped with a further station scanning unit 161 related to digital video or digital television signals. The seventh receiving electronics 127 and the eighth receiving electronics 128 may be equipped to process internet services. Further possibilities of services which may be processed are analog video signals and/or analog television services. The analog radio services may still be subdivided in very high frequency VHF, medium wave MW or long wave LW.

The seventh connector 117 and the eighth connector 118 in the receiver unit 100 of Figure 7 are placed within the receiver unit 100 and a seventh antenna 177 and an eighth antenna 178 is also part of the receiver unit 100. An arrangement like this is also possible for the other connectors 111, 112, 113, 114, 115 and 116. The temperature sensor 150 of Figure 2 may also be arranged within the receiver unit 100 of Figure 7.

If the receiver unit 100 comprises digital radio and analog radio, it may be possible to deactivate the receiving electronics of the analog radio, if the station selected by a user of the entertainment system 10 is only broadcasted via digital radio and not via analog radio. If the signal is only broadcasted via analog radio, the receiving electronics for the digital may be switched off as part of the partially deactivating of the receiving electronics as explained above.

The subparts of the receiver unit 100 of Figure 7 are shown to comprise two receiving electronics for each system. Of course, a higher number of receiving electronics may also be applicable. Furthermore, it could also be possible to have one signal transmission, particularly analog radio with only one receiving electronics.

The station scanning unit 160 internally also comprises a receiving electronics to process the signals of the antenna connected to the first connector 111. Therefore, a deactivation of the station scanning unit 160 also includes a deactivation of its receiving electronics.

The basic concept of the invention therefore is to allow for a shut-off of receiving electronics 121, 122, 123, 124, 125, 126, 127, 128 due to pre-defined system parameters. In modern vehicle entertainment systems 200, for example digital radio tuners and analog radio tuners are combined. If the signal quality of digital radio is insufficient, the analog radio may be used as a back fall option if the radio station provides both digital and analog service.

The methods described above are applicable to all transmission bands, particularly to VHF, VHF-3(DAB), MW, LW, DVB-T or 3G, 4G or 5G transmissions.

Although the invention has been described and picked more close in detail the way of the preferred exemplary embodiments, the invention is not limited by the disclosed exemplary embodiments. Other variations can be derived therefrom and from the description of the invention and the claims without departing from the scope of the protected invention.

List of Reference Numerals

| 1   | vehicle                  |
|-----|--------------------------|
| 2   | interior (of the vehicle)|
| 3   | roof                     |
| 4   | trunk                    |
| 5   | vehicle control unit     |
| 10  | entertainment system     |
| 100 | receiver unit            |
| 111 | first connector          |
| 112 | second connector         |
| 113 | third connector          |
| 114 | fourth connector         |
| 115 | fifth connector          |
| 116 | sixth connector          |
| 117 | seventh connector        |
| 118 | eighth connector         |

| | |
|---|---|
| 121 | first receiving electronics |
| 122 | second receiving electronics |
| 123 | third receiving electronics |
| 124 | fourth receiving electronics |
| 125 | fifth receiving electronics |
| 126 | sixth receiving electronics |
| 127 | seventh receiving electronics |
| 128 | eighth receiving electronics |
| 130 | controller electronics |
| 131 | parameter input |
| 141 | first output |
| 142 | second output |
| 143 | third output |
| 144 | fourth output |
| 145 | fifth output |
| 146 | sixth output |
| 147 | seventh output |
| 148 | eighth output |
| 150 | temperature sensor |
| 151 | semiconductor structure |
| 160 | station scanning unit |
| 161 | further station scanning unit |
| 177 | seventh antenna |
| 178 | eighth antenna |
| 200 | main unit |
| 210 | (optional) loudspeaker |
| 220 | (optional) display |
| 300 | flowchart |
| 310 | first step |
| 311 | temperature determination step |
| 312 | difference spectrum step |
| 313 | velocity determination step |
| 320 | second step |
| 330 | third step |
| 400 | table |
| 410 | pre-defined system parameters |
| 411 | first pre-defined system parameter |
| 412 | second pre-defined system parameter |
| 413 | third pre-defined system parameter |
| 414 | fourth pre-defined system parameter |
| 420 | reaction |
| 421 | first reaction |
| 422 | second reaction |
| 423 | third reaction |
| 424 | fourth reaction |
| 501 | first frequency spectrum |
| 502 | second frequency spectrum |
| 503 | difference spectrum |
| 511 | first axis |
| 512 | second axis |

**Claims**

1. A method of operation of a receiver unit (100) for an entertainment system (10) of a vehicle (1), wherein the receiver unit (100) comprises at least two receiving electronics (121, 122) and a controller electronics (130), wherein the receiving electronics (121, 122) are equipped to output an entertainment signal to a main unit (200) of the entertainment system (10), comprising the following steps performed by the controller electronics (130):

   - Determining at least one pre-defined system parameter (410) ;
   - At least partially deactivating one of the receiving electronics (121, 122) based upon the predetermined system parameter.

2. The method according to claim 1, wherein the predetermined system parameter is a vehicle velocity, wherein the deactivating of the receiving electronics (121, 122) is performed when the vehicle velocity is below a threshold velocity.

3. The method according to claim 2, wherein the controller electronics (130) receives the vehicle velocity from a vehicle control unit (5).

4. The method according to any of claims 1 to 3, wherein the pre-defined system parameter (410) is a change in a frequency spectrum (501, 502) measured by the antennas, wherein the deactivating of the receiving electronics (121, 122) is performed when the change in the frequency spectrum (501, 502) is below a certain threshold value.

5. The method according to claim 4, wherein the change in the frequency spectrum (501, 502) is calculated using a variance of a change in a spectral intensity for pre-defined frequencies.

6. The method according to claim 4 or 5, wherein the change in the frequency spectrum (501, 502) comprises a change of a signal-to-noise ratio of the frequency spectrum (501, 502).

7. The method according to any of claims 1 to 6, wherein the pre-defined system parameter (410) is a temperature, a temperature of the receiver unit (100) is measured, and the measured temperature is compared to a threshold temperature, wherein the deactivating of the receiving electronics (121, 122) is performed when the measured temperature is above the threshold temperature.

8. The method according to claim 7, wherein the temperature is measured within a semiconductor structure (151) of the receiving electronics (121, 122).

9. The method according to any of claims 1 to 8, wherein the at least partially deactivated receiving electronics (121, 122) is reactivated based upon the predetermined system parameter.

**10.** The method according to any of claims 1 to 9, wherein at least one of the receiving electronics (121, 122) performs station scanning and the partially deactivating one of the receiving electronics (121, 122) comprises a deactivation of the station scanning.

**11.** The method according to any of claims 1 to 10, wherein the deactivating of the receiving electronics (121, 122) is performed in a pre-defined sequence, wherein the sequence comprises an initial reduction or switching off of station scanning and a subsequent switching off of all but one of the receiving electronics (121, 122).

**12.** The method according to any of claims 1 to 11, wherein the receiving electronics (121, 122) are equipped to process digital radio signals and/or digital video signals and/or digital television signals and/or analog radio signals and/or analog video signals and/or analog television signals and/or internet services.

**13.** A receiver unit (100) for an entertainment system (10) of a vehicle (1), comprising at least two connectors (111, 112) for antennas, at least two receiving electronics (121, 122) and a controller electronics (130), wherein each connector (111, 112) is assigned to one of the receiving electronics (121, 122), wherein the receiving electronics (121, 122) are equipped to output a signal to a main unit (200) of the entertainment system (10), wherein the controller unit is equipped to perform the method according to any of claims 1 to 12.

**14.** A receiver unit (100) according to claim 13, wherein the receiver unit comprises the antennas (177, 178).

**15.** An entertainment system (10) of a vehicle (1) comprising a receiver unit (100) according to claim 13 or 14 and further comprising a main unit (200) capable of receiving entertainment signals from the receiving electronics (121, 122) and to output the received entertainment signals to a loudspeaker (210) and/or a display (220).

**Fig. 1**

**Fig. 2**

Fig. 3

501

512

511

502

512

511

503

512

511

Fig. 4

EP 3 930 201 A1

300

310 → 320

310
311
312
313

320 → 330

330

**Fig. 5**

400

| 410 | 420 |
|-----|-----|
| 411 | 421 |
| 412 | 422 |
| 413 | 423 |
| 414 | 424 |

**Fig. 6**

Fig. 7

Europäisches
Patentamt

European
Patent Office

Office européen
des brevets

## EUROPEAN SEARCH REPORT

Application Number

EP 20 18 2599

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2014 226142 A1 (CONTINENTAL AUTOMOTIVE GMBH [DE]) 16 June 2016 (2016-06-16) * abstract; figure 1 * * paragraph [0001] - paragraph [0024] * * paragraph [0039] - paragraph [0041] * ----- | 1-3,9-15 | INV. H04B1/08 H04B1/12 H04B7/08 |
| X | US 2008/051046 A1 (RUCKRIEM REINHARD [DE]) 28 February 2008 (2008-02-28) * abstract; figures 1,2,5,6 * * paragraph [0001] - paragraph [0005] * * paragraph [0013] - paragraph [0023] * * paragraph [0029] - paragraph [0035] * * paragraph [0038] - paragraph [0042] * ----- | 1-6,9-15 | |
| X | US 7 024 168 B1 (GUSTAFSSON KJELL [SE] ET AL) 4 April 2006 (2006-04-04) * abstract; figures 4,5 * * column 3, line 12 - column 4, line 15 * * column 5, line 32 - column 7, line 57 * ----- | 1,4-6, 9-15 | |
| X | US 2009/290625 A1 (RIDDLE CHRISTOPHER C [US] ET AL) 26 November 2009 (2009-11-26) * abstract; figure 5 * * paragraph [0005] - paragraph [0011] * * paragraph [0029] - paragraph [0040] * * paragraph [0061] - paragraph [0065] * ----- | 1,7-9, 13-15 | TECHNICAL FIELDS SEARCHED (IPC) H04B B60R |

The present search report has been drawn up for all claims

| Place of search | Date of completion of the search | Examiner |
|---|---|---|
| Munich | 25 September 2020 | Galli, Paolo |

EPO FORM 1503 03.82 (P04C01)

## ANNEX TO THE EUROPEAN SEARCH REPORT
## ON EUROPEAN PATENT APPLICATION NO.

EP 20 18 2599

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2020

| Patent document cited in search report | Publication date | Patent family member(s) | | Publication date |
|---|---|---|---|---|
| DE 102014226142 A1 | 16-06-2016 | CN | 107005257 A | 01-08-2017 |
| | | DE | 102014226142 A1 | 16-06-2016 |
| | | EP | 3235140 A1 | 25-10-2017 |
| | | US | 2017339441 A1 | 23-11-2017 |
| | | WO | 2016096604 A1 | 23-06-2016 |
| US 2008051046 A1 | 28-02-2008 | DE | 102007040387 A1 | 10-04-2008 |
| | | US | 2008051046 A1 | 28-02-2008 |
| | | US | 2011195682 A1 | 11-08-2011 |
| | | US | 2012076242 A1 | 29-03-2012 |
| | | US | 2013182801 A1 | 18-07-2013 |
| US 7024168 B1 | 04-04-2006 | AT | 422122 T | 15-02-2009 |
| | | AU | 5822100 A | 30-01-2001 |
| | | CN | 1373951 A | 09-10-2002 |
| | | EP | 1197025 A1 | 17-04-2002 |
| | | HK | 1049559 A1 | 27-05-2005 |
| | | IL | 147482 A | 08-03-2007 |
| | | JP | 2003504957 A | 04-02-2003 |
| | | PL | 352279 A1 | 11-08-2003 |
| | | US | 7024168 B1 | 04-04-2006 |
| | | WO | 0105088 A1 | 18-01-2001 |
| US 2009290625 A1 | 26-11-2009 | CN | 102027431 A | 20-04-2011 |
| | | EP | 2304518 A2 | 06-04-2011 |
| | | JP | 5362820 B2 | 11-12-2013 |
| | | JP | 2011521386 A | 21-07-2011 |
| | | KR | 20110016452 A | 17-02-2011 |
| | | TW | 201004171 A | 16-01-2010 |
| | | US | 2009290625 A1 | 26-11-2009 |
| | | WO | 2009143487 A2 | 26-11-2009 |

EPO FORM P0459

For more details about this annex : see Official Journal of the European Patent Office, No. 12/82